# EUROPÄISCHE PATENTSCHRIFT

(11) **EP 0 679 008 B1**
(45) Veröffentlichungstag und Bekanntmachung des Hinweises auf die Patenterteilung: **31.10.2001**
(21) Anmeldenummer: 95103516.1
(22) Anmeldetag: 10.03.1995
(51) Int. Cl.: H04M 15/00

(54) **Schaltungsanordnung zur Gebührenimpulsfilterung**
Circuit for filtering of meter-pulsis
Circuit à filtre d'impulsion de métrage

(30) Priorität: 23.03.1994 DE 4410058
(43) Veröffentlichungstag der Anmeldung: 25.10.1995
(73) Patentinhaber: Infineon Technologies AG, 81669 München (DE)
(72) Erfinder: Zojer, Herbert, Dipl.-Ing., A-9640 Kötschach (AT); Gazsi, Lajos, Dr. Ing., D-40239 Düsseldorf (DE); Linder, Thomas, Dipl.-Ing., A-9800 Villach (AT)
(74) Vertreter: Zedlitz, Peter, Dipl.-Inf.

(56) Entgegenhaltungen:
- US-A- 4 829 517
- US-A- 5 172 407
- PATENT ABSTRACTS OF JAPAN, unexamined applications, E Field, Band 13, Nr. 213, 18. Mai 1989 THE PATENT OFFICE JAPANESE GOVERNMENT Seite 102 E 759; & JP-A-01 025 660 (NEC)

## Beschreibung

Die Erfindung betrifft eine Schaltungsanordnung zur Gebührenimpulsfilterung gemäß dem Oberbegriff des Anspruchs 1.

Eine Teilnehmertelefonleitung wird von einer Gleichspannungsquelle gespeist, die in Reihe mit anderen Spannungssignalquellen geschaltet ist, beispielsweise für die Gesprächssignale im phonischen Band, für die Weckersignale und für die Signale zur Anzeige der Gebühren für den Teilnehmer.

Die Anschlüsse der Leitungen sind parallel zueinander sowohl mit der Gesprächsschaltung als auch mit der Weckerschaltung des Teilnehmertelefongerätes und evtl. innerhalb oder außerhalb dieses Telefongerätes mit anderen Vorrichtungen verbunden, beispielsweise einem Anzeigegerät für die fortlaufende Zählung der Gebühren eines gerade geführten Telefongesprächs, die durch die entsprechenden Zentralorgane, ausgeführt wird. Eine Vermittlungseinrichtung erzeugt Steuersignale, die normalerweise "Gebührensignale" bezeichnet werden, und gibt diese an die entsprechende Telefonleitung aus.

Unter derartigen Gebührensignalen versteht man Gebührenimpulse mit einer Frequenz von 12 KHz bzw. 16 KHz, die während eines Gesprächs mit einer Dauer von etwa 200 msec auf einer Teilnehmeranschlußleitung gesendet werden, um die Gebührenanzeige eine Einheit weiterzählen zu lassen. Die Spannung dieser Impulse kann bis zu 5 Vᵣₘₛ betragen. Die Speisespannung soll an eine Impedanz von Z_{L} = 200 ohm unabhängig vom Impedanzfilter, welche in der Vermittlungseinrichtung vorgesehen ist, maximal um +-5% variieren.

Aus der DE 35 22 077 A1 bzw. der DE 35 16 007 A1 sind Schaltungsanordnungen für Signalgeneratoren zur Erzeugung derartiger Gebührensignale bekannt.

Durch das im Teilnehmerschaltungen verwendete Speisungsprinzip erscheinen die gesendeten Gebührenimpulssignale auf der Empfangsseite und werden über das Impedanzfilter rückgekoppelt.

Damit wird die Amplitude der Signale im unerwünschten Ausmaß gedämpft. Bei bisherigen Lösungen wird diese Dämpfung durch eine automatische Verstärkungsregelung kompensiert. Zusätzlich übersteuern die empfangenen Gebührenimpulssignale aufgrund Ihrer großen Amplitude in digitalen Vermittlungseinrichtungen den nachgeschalteten Analog-Digitalwandler für die Digitalisierung der Sprachsignale. Somit ist eine Filterung der empfangenen Signale notwendig.

Bisher erfolgt die Filterung mit einem eigens abgeglichenen Notchfilter auf einem externen Hybriden. Eine derartige Schaltung ist in US-A-5 172 407 beschrieben. Ein Notchfilter in einem Rückkoppelzweig verschlechtert aber durch zusätzliche Phasendrehung die Stabilität. Die Integration eines Notchfilters ist aufgrund fertigungstechnischer Toleranzen nicht ohne Abgleich mit der geforderten Genauigkeit möglich. Um sich die automatische Verstärkungsregelung ersparen zu können, ist eine Dämpfung von größer 26 dB unbedingt notwendig.

Aufgabe der vorliegenden ist es eine Schaltungsanordnung zur Gebührenimpulsfilterung anzugeben, die die obigen Erfordernisse erfüllt.

Diese Aufgabe wird durch den kennzeichnenden Teil des Anspruchs 1 gelöst. Weiterbildungen sind Kennzeichen der Unteransprüche.

Vorteil der vorliegenden Erfindung ist, daß bei Verwendung einer adaptiven Regelung Dämpfungen ohne Abgleich bis maximal 50 dB möglich sind und die adaptive Regelung aufgrund ihrer Nichtlinearität nicht die Stabilität der Impedanzschleife stört. Durch die sehr hohe Dämpfung der adaptiven Regelung ist eine automatische Verstärkungsregelung nicht mehr notwendig. Die rückgekoppelten Signale können vernachlässigt werden.

Die Erfindung wird nachfolgend anhand dreier Figuren näher erläutert. Es zeigen:
- Figur 1: ein Blockschaltbild einer erfindungsgemäßen Schaltungsanordnung,
- Figur 2: ein Blockschaltbild der erfindungsgemäßen adaptiven Regelung,
- Figur 3: ein Blockschaltbild einer Komparator-Integratoreinheit gemäß Figur 2.

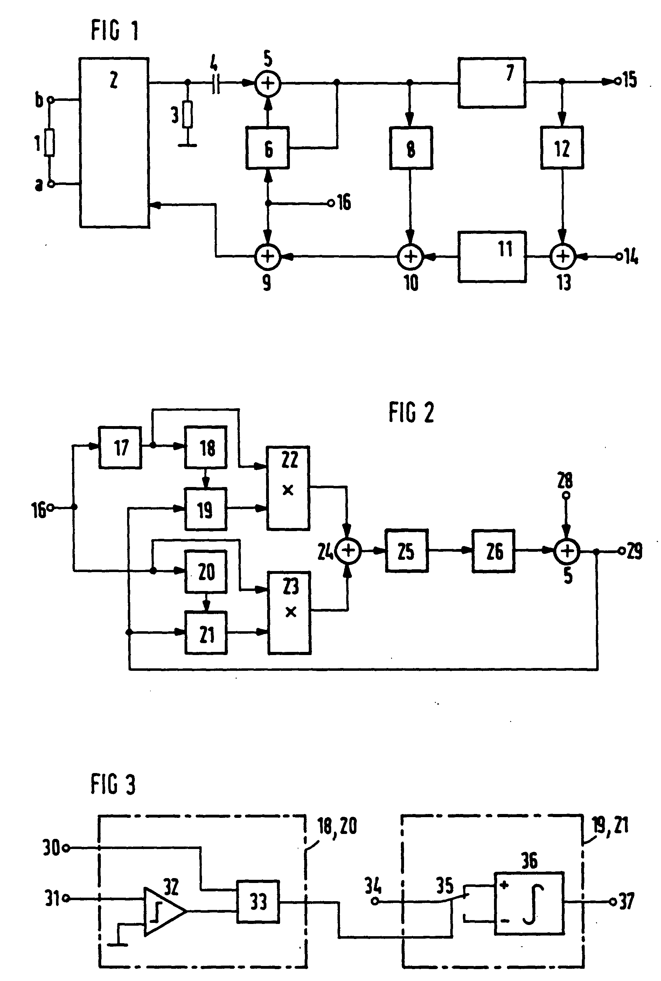

In Figur 1 ist mit 1 eine Impedanz dargestellt, welche einer Leitungsimpedanz an einer ab-Teilnehmerleitung entspricht. Diese ist mit einer Hochvolteinheit 2 verbunden, welche die Signale einer Vermittlungseinheit für die Teilnehmerleitung in entsprechende Hochvoltsignale umwandelt und die von der Teilnehmereinrichtung gesendeten Hochvoltsignale in entsprechende Niedervoltsignale für die Vermittlungseinrichtung wandelt. Ausgangsseitig ist die Hochvolteinheit in Empfangsrichtung mit einem Hochpaß gekoppelt, der aus dem parallel geschalteten Widerstand 3 und den in Reihe geschalteten Kondensator 4 besteht. Der Hochpaß 3, 4 ist ausgangsseitig mit dem ersten Eingang einer ersten analogen Additionsstufe 5 verbunden. Der Ausgang der analogen Additionsstufe 5 ist zum einen mit dem Eingang eines Analog-Digitalwandlers 7, dem Fehlereingang einer adaptiven Regeleinheit 6 sowie mit dem Eingang eines Impedanzfilters 8 verbunden. Der Ausgang der adaptiven Regeleinheit 6 ist mit dem zweiten Eingang der ersten Additionsstufe 5 verbunden. Über eine Anschlußklemme 16 ist ein Gebührensignal einspeisbar. Diese Anschlußklemme 16 ist mit dem Eingang der adaptiven Regeleinheit 6 und mit dem ersten Eingang einer zweiten Additionsstufe 9 verschaltet. Der Ausgang der Additionsstufe 9 ist mit der Hochvolteinheit in Senderichtung verbunden. Der Ausgang des Impedanzfilters 8 ist mit dem ersten Eingang einer dritten Additionsstufe 10 verschaltet. Der Ausgang der dritten Additionsstufe 10 ist mit dem zweiten Eingang der zweiten Additonsstufe 9 verbunden. Der Ausgang des Analog-Digitalwandlers 7 ist zum einen mit einer Anschlußklemme 15 und dem Eingang eines digitalen Impedanzfilters 12 verbunden. Der Ausgang des digitalen Impedanzfilters 12 ist mit dem ersten Eingang einer vierten Additionsstufe 13 verschaltet. Der zweite Eingang der vierten Additionsstufe 13 ist mit einer Anschlußklemme 14 verbunden. Der Ausgang der vierten Additionsstufe 13 ist mit dem Eingang eines Digital-Analogwandlers 11 verschaltet. Der Ausgang des Digital-Analogwandlers 11 ist mit dem zweiten Eingang der dritten Additionsstufe 10 verbunden.

In Figur 2 ist die adaptive Regeleinheit 6 gemäß Figur 1 näher dargestellt. Mit 16 ist wiederum eine Anschlußklemme bezeichnet, der das Gebührensignal zuführbar ist. Diese Anschlußklemme 16 ist mit dem Eingang einer Phasendreheinrichtung 17 verschaltet. Der Ausgang der Phasendreheinrichtung 17 ist zum einen mit dem ersten Eingang eines Multiplizierers 22 und zum anderen mit dem Eingang einer Steuereinrichtung 18 verbunden. Das von der Steuereinrichtung 18 erzeugte Ausgangssignal steuert einen Integrator 19 in seine Integrationsrichtung. Das Ausgangssignal des Integrators 19 ist mit dem zweiten Eingang der Multiplikationseinheit 22 verschaltet. Des weiteren ist die Eingangsklemme 16 mit dem ersten Eingang einer zweiten Multiplikationseinheit 23 und mit dem Eingang einer zweiten Steuereinheit 20 verschaltet. Das von der Steuereinheit 20 erzeugte Ausgangssignal steuert einen zweiten Integrator 21 in seiner Integrationseinrichtung, dessen Ausgangssignal mit dem zweiten Eingang der Multiplikationseinheit 23 verbunden ist. Die Ausgangssignale der beiden Multiplikationseinheiten 22, 23 werden einer Additionsstufe 24 zugeführt. Das Ausgangssignal der Additionsstufe 24 wird über einen Bandpaß 25 und über ein Tiefpaßfilter 26 der Additionsstufe 5 gemäß Figur zugeführt. Mit 28 ist eine Anschlußklemme dargestellt, die mit dem ersten Eingang der Additionsstufe 5 verbunden ist und der das vom Hochpaß 3,4 gelieferte Ausgangssignal zuführbar ist. Mit 29 ist eine Ausgangskleme dargestellt, die mit dem Ausgang der Additionsstufe 5 verschaltet ist. Der Ausgang der Additionsstufe 5 ist jeweils mit dem Eingang der Integratoren 19 und 21 verschaltet.

Die gesamten Filter und Integratoren können vorzugsweise in Schalter-Kondensator-Technik aufgebaut sein und z.B. mit einer Taktfrequenz von 512 KHz betrieben werden. Als phasenverschiebende Einrichtung kann insbesondere ein Hochpaßfilter in Schalter-Kondensator-Technik verwendet werden.

In Figur 3 ist beispielsweise eine Steuereinrichtung 18 bzw. 20 und der jeweils zugehörige Integrator 19 bzw. 21 dargestellt. Die Schaltungsanordnung gemäß Figur 3 ist in Schalter-Kondensator-Technik ausgeführt. Mit 30 ist eine Eingangsklemme bezeichnet, der z.B. das Taktsignal von 512 KHz zuführbar ist. Diese Eingangsklemme 30 ist mit dem ersten Anschluß eines UND-Gatters 33 verbunden. Der Klemme 31 wird das vom Hochpaß 17 bzw. von der Anschlußklemme 16 gelieferte Signal zugeführt. Diese ist mit dem ersten Eingang eines Komparators 32 verbunden. Der zweite Eingang des Komparators 32 ist mit Masse verschaltet. Der Ausgang des Komparators 32 ist mit dem zweiten Anschluß des UND-Gatters 33 verbunden. Der Ausgang des UND-Gatters steuert einen Umschalter 35. Dem Mittelanschluß des Umschalters 35 wird das von der Additionsstufe 27 gemäß Figur 2 gelieferte Ausgangssignal über eine Anschlußklemme 34 zugeführt. Der erste Umschaltkontakt 35 ist mit dem nichtinvertierenden Eingang eines Integrators 36 verschaltet. Der zweite Umschaltkontakt des Umschalters 35 ist mit dem invertierenden Eingang des Integrators 36 verschaltet. Der Ausgang des Integrators 36 ist mit einer Ausgangsklemme 37 verbunden, an der das Ausgangssignal des Integrators abgegriffen werden kann.

Das an der Eingangsklemme 16 eingespeiste Gebührensignal gelangt zum einen über die Additionsstufe 9 und die Hochvolteinrichtung auf die Teilnehmerleitung. Empfangsseitig kommt dieses Signal über den Hochpaß 3, 4 zurück zur Vermittlungseinrichtung an den ersten Eingang der Additionsstufe 5. Die adaptive Regeleinheit 6 führt der Additionsstufe 5 in Abhängigkeit vom Gebührenimpulssignal und von dem am Ausgang der Additionsstufe 5 anliegenden Signal vorzeichenrichtig ein entsprechendes "Löschsignal" zu, wodurch der Teil des Gebührenimpulssignals, welcher über die Teilnehmereinrichtung empfangen wird, gelöscht wird.

Die in Figur 2 dargestellte phasenschiebende Einheit ist vorzugsweise in Schalter-Kondensator-Technik als Hochpaß ausgeführt und dient dazu, das vom Gebührenimpulsgenerator erzeugte und über die Anschlußklemme 16 eingespeiste Signal um 90° in der Phase zu verschieben, wobei Frequenz und Amplitude gleichbleiben. Um von Absolutwertschwankungen der verwendeten Elemente unabhängig zu sein, ist dieser Schaltungsteil in Schalter-Kondensatortechnik ausgeführt. Bei einem verwendeten Takt von 512 KHz werden zwar nicht exakt 90° Phasenverschiebung erreicht, dies ist systembedingt aber auch nicht unbedingt notwendig.

Sowohl das Gebührenimpulssignal wie auch das phasenverschobene Gebührenimpulssignal werden jeweils zur Steuerung der Integrationsrichtung eines Integrators 19 bzw. 21 verwendet. Hierzu werden z.B. beide Signale einer Steuereinheit 18 bzw. 20 zugeführt. Diese Steuereinheit kann z.B. das Signal mit "0" vergleichen und so in Abhängigkeit des Signalvorzeichens die Integrationsrichtung der Integratoren 19 bzw. 21 steuern. Da der Zeitpunkt des Umschaltens exakt im Nulldurchgang des Gebührensignals bzw. des phasenverschobenen Gebührensignals erfolgen muß, ist an dieser Stelle ein Komparator 32 mit geringem Offset erforderlich. Eine nachgeschaltete in der Steuereinrichtung vorgesehene Logik, gemäß Figur 3 z.B. UND-Gatter 33, liefert die Taktsignale für die in Schalter-Kondensatortechnik ausgeführten Integratoren, d.h. es erfolgt eine Synchronisation mit dem Systemtakt. Für die Stabilität des Systems ist eine Grenzfrequenz der Integratoren im dargestellten Beispiel von ungefähr 800 Hz notwendig. Das daraus resultierende große Kapazitätsverhältnis der in Schalter-Kondensator-Technik ausgeführten Integratoren 19, 21 bereitet jedoch keine Probleme, da der exakte Wert der Grenzfrequenz nicht von Bedeutung ist.

In den Multiplizierern 22 und 23 werden aus dem den Integratoren 19 und 21 erzeugten Ausgangssignalen und dem Gebührensignal bzw. dem phasenverschobenen Gebührensignal die beiden Komponenten erzeugt, die zur Auslöschung des Gebührensignals in der Additionsstufe 5 notwendig sind. Die Multiplizierer 22, 23 sind zur Erzielung eines hohen Dynamikbereichs auf maximale Aussteuerbarkeit ausgelegt, der bei der gewählten Schaltungstechnik unvermeidliche Offset wird durch optimales Layout gering gehalten. Der Offset ist systembedingt unproblematisch, verringert aber die maximal mögliche Aussteuerung. Die folgende Additionsstufe 24 liefert am Ausgang das in Amplitude und Phase zur Auslöschung erforderliche Signal, welches aber hohe Rauschanteile und einen Gleichspannungsoffset der Multiplizierer enthält.

Daher ist ein Bandpaß 25 nachgeschaltet, der mit einer Güte von z.B. 6 für eine Absenkung des Rauschens im Sprachband von 30 dB sorgt. Aufgrund der Anforderungen an Mittenfrequenz und Güte ist auch der Bandpaß z.B. in Schalter-Kondensatortechnik realisiert. Er bildet die dominante Rauschquelle im System und ist auf gleiche Rauschanteile der beteiligten Komponenten dimensioniert. Die hohen Außerbandsignale des Ausgangssignals werden dann mit einem Nachfilter, z.B. einem Tiefpaß 26 zweiter Ordnung ausgefiltert und der Additionsstufe 27 zugeführt.

Bei Realisierung in einer anderen Technik als der Schalter-Kondensator-Technik kaum das Nachfilter 26 evtl. auch entfallen.

## Patentansprüche

1. Schaltungsanordnung zur Gebührenimpulsfilterung mit einer Hochvolteinheit (2), die einerseits mit einer Fernmeldeleitung (a, b) und andererseits mit einer Vermittlungseinrichtung verbunden ist,
**dadurch gekennzeichnet,**
**daß** zwischen Hochvolteinheit (2) und Vermittlungseinrichtung eine adaptive Regelung (6) geschaltet ist, der zum einen das Gebührenimpulssignal und zum anderen ein Fehlersignal zugeführt wird, wobei das Fehlersignal aus der Summe des empfangsseitigen Signals und des Ausgangssignals der adaptiven Regelung (6) erzeugt wird.

2. Schaltungsanordnung nach Anspruch 1,
**dadurch gekennzeichnet,**
**daß** die adaptive Regelung Mittel zur Phasenverschiebung des Gebührenimpulssignals aufweist und das Gebührenimpulssignal einem ersten Multiplizierer (22) und das phasenverschobene Gebührenimpulssignal einem zweiten Multiplizierer (23) zugeführt wird, des weiteren zwei Integratoren (19, 21) aufweist, die jeweils durch das Gebührenimpulssignal bzw. das phasenverschobene Gebührenimpulssignal in ihrer Integrationssrichtung gesteuert werden und die Integratoren das Fehlersignal der adaptiven Regelung integrieren und das Ausgangssignal des ersten Integrators (19) dem anderen Eingang des ersten Multiplizierers (22) und das Ausgangssignal des zweiten Integrators (21) dem anderen Eingang des zweiten Multiplizierers (23) zugeführt wird, wobei die Ausgangssignale der Multiplizierer (22, 23) in einer Additionsstufe (24) summiert werden und einem Bandpaß (25) zugeführt werden, dessen Ausgangssignale mit dem sendeseitigen Eingangssignal in einer Additionsstufe (5) aufsummiert werden, wobei am Ausgang der Additionsstufe (5) das Fehlersignal abgreifbar ist.

3. Schaltungsanordnung nach Anspruch 2,
**dadurch gekennzeichnet,**
**daß** das Mittel zur Phasenverschiebung ein Hochpaß ist.

4. Schaltungsanordnung nach Anspruch 3,
**dadurch gekennzeichnet,**
**daß** der Hochpaß (17), der Bandpaß (25) sowie die Integratoren (19, 21) in Schalter-Kondensatortechnik ausgeführt sind.

5. Schaltungsanordnung nach einem der Ansprüche 2 bis 4,
**dadurch gekennzeichnet,**
**daß** die Steuerung der Integratoren durch einen Komparator (32) erfolgt.

## Claims

1. Circuit arrangement for meter pulse filtering having a high-voltage unit (2) connected firstly to a telecommunications line (a, b) and secondly to a switching centre,
**characterized**
**in that** the high-voltage unit (2) and the switching centre have an adaptive controller (6) connected between them which is supplied firstly with the meter pulse signal and secondly with an error signal, the error signal being produced from the sum of the reception-end signal and the output signal from the adaptive controller (6).

2. Circuit arrangement according to Claim 1,
**characterized**
**in that** the adaptive controller has means for phase-shifting the meter pulse signal, and the meter pulse signal is supplied to a first multiplier (22), and the phase-shifted meter pulse signal is supplied to a second multiplier (23), additionally has two integrators (19, 21), the integration direction of which is respectively controlled by the meter pulse signal and the phase-shifted meter pulse signal, and the integrators integrate the error signal of the adaptive controller, and the output signal from the first integrator (19) is supplied to the other input of the first multiplier (22), and the output signal from the second integrator (21) is supplied to the other input of the second multiplier (23), with the output signals from the multipliers (22, 23) being summed in an addition stage (24) and being supplied to a bandpass filter (25) whose output signals are summed with the transmission-end input signal in an addition stage (5), the error signal being able to be tapped off at the output of the addition stage (5).

3. Circuit arrangement according to Claim 2,
**characterized**
**in that** the phase-shifting means is a high-pass filter.

4. Circuit arrangement according to Claim 3,
**characterized**
**in that** the high-pass filter (17), the bandpass filter (25) and the integrators (19, 21) are produced using switch-capacitor technology.

5. Circuit arrangement according to one of Claims 2 to 4,
**characterized**
**in that** the integrators are controlled by a comparator (32).

## Revendications

1. Circuit pour le filtrage des impulsions de taxation comportant une unité haute tension (2) qui est reliée d'une part à une ligne de télécommunication (a, b) et d'autre part à un dispositif de commutation,
**caractérisé par le fait qu'**il est branché entre l'unité haute tension (2) et le dispositif de commutation une régulation adaptative (6) à laquelle sont envoyés d'une part le signal d'impulsions de taxation et d'autre part un signal d'erreur, le signal d'erreur étant produit à partir de la somme du signal côté réception et du signal de sortie de la régulation adaptative (6).

2. Circuit selon la revendication 1,
**caractérisé par le fait que** la régulation adaptative comporte un moyen pour le déphasage du signal d'impulsions de taxation, le signal d'impulsions de taxation étant envoyé à un premier multiplicateur (22) et le signal d'impulsions de taxation déphasé étant envoyé à un deuxième multiplicateur (23), qui comporte en outre deux intégrateurs (19, 21) qui sont commandés quant à leur sens d'intégration respectivement par le signal d'impulsions de taxation et par le signal d'impulsions de taxation déphasé, les intégrateurs intégrant le signal d'erreur de la régulation adaptative et le signal de sortie du premier intégrateur (19) étant envoyé à l'autre entrée du premier multiplicateur (22) et le signal de sortie du deuxième intégrateur (21) à l'autre entrée du deuxième multiplicateur (23), les signaux de sortie des multiplicateurs (22, 23) étant additionnés dans un étage additionneur (24) et envoyés à un filtre passe-bande (25) dont les signaux de sortie sont additionnés au signal d'entrée côté émission dans un étage additionneur (5), le signal d'erreur pouvant être prélevé à la sortie de l'étage additionneur (5).

3. Circuit selon la revendication 2,
**caractérisé par le fait que** le moyen pour le déphasage est un filtre passe-haut.

4. Circuit selon la revendication 3,
**caractérisé par le fait que** le filtre passe-haut (17), le filtre passe-bande (25) ainsi que les intégrateurs (19, 21) sont réalisés selon la technique commutateur-condensateur.

5. Circuit selon l'une des revendications 2 à 4,
**caractérisé par le fait que** la commande des intégrateurs s'effectue par un comparateur (32).
